# EUROPEAN PATENT APPLICATION

(11) **EP 4 517 856 A1**
(43) Date of publication of application: **05.03.2025**
(21) Application number: 24193608.7
(22) Date of filing: 08.08.2024
(51) Int. Cl.: H01M 4/131, H01M 4/36, H01M 4/505, H01M 4/525, H01M 4/62, H01M 10/0525, H01M 4/02

(54) **CATHODE FOR LITHIUM SECONDARY BATTERY AND LITHIUM SECONDARY BATTERY INCLUDING THE SAME**

(30) Priority: 10.08.2023 KR 20230104953
(71) Applicant: SK On Co., Ltd., Seoul 03161 (KR)
(72) Inventor: LEE, Jong Hyeok, 34124 Daejeon (KR); KIM, Hyun Ji, 34124 Daejeon (KR); JO, Yoon Ji, 34124 Daejeon (KR); HWANG, Chang Mook, 34124 Daejeon (KR)
(74) Representative: Prüfer & Partner mbB Patentanwälte · Rechtsanwälte

(57) **Abstract**

A cathode for a lithium secondary battery includes a cathode current collector, a first cathode active material layer formed on the cathode current collector and including a first cathode active material and a first cathode conductive material, and a second cathode active material layer formed on the first cathode active material layer and including a second cathode active material that has an average particle diameter larger than that of the first cathode active material, and a second cathode conductive material. A content of the first cathode conductive material based on a total weight of the first cathode active material layer is greater than a content of the second cathode conductive material based on a total weight of the second cathode active material layer.

## Description

### CROSS-REFERENCE TO RELATED APPLICATION AND CLAIM OF PRIORITY

This application claims priority to Korean Patent Application No. 10-2023-0104953 filed on August 10, 2023 in the Korean Intellectual Property Office (KIPO), the entire disclosure of which is incorporated by reference herein.

### TECHNICAL FIELD

The disclosure of this patent application relates to a cathode for a lithium secondary battery and a lithium secondary battery including the same.

### BACKGROUND

A secondary battery which can be charged and discharged repeatedly has been widely employed as a power source of a mobile electronic device such as a camcorder, a mobile phone, a laptop computer, etc. Recently, a battery pack including the secondary battery is being developed and applied as a power source of an eco-friendly vehicle such as an electric automobile.

A lithium secondary battery is being actively developed and applied due to high operational voltage and energy density per unit weight, a high charging rate, a compact dimension, etc.

For example, a lithium secondary battery may include an electrode assembly including a cathode, an anode and a separator interposed between the cathode and the anode, and an electrolyte solution impregnating the electrode assembly.

For example, the cathode may include a cathode current collector and a cathode active material layer formed on the cathode current collector. For example, the cathode active material layer may include a lithium metal oxide particle as a cathode active material.

For example, the lithium metal oxide particle may have the form of a secondary particle in which a plurality of primary particles are aggregated. To achieve a high capacity of the lithium secondary battery, a high-nickel-based lithium metal oxide particle having an increased nickel content (e.g., an NCM 811 particle) is used as the cathode active material.

However, cracks in the high-nickel-based lithium metal oxide particle may occur due to insertion and desorption of lithium during repeated charging and discharging of the lithium secondary battery. Accordingly, a gas generation due to a side reaction between the lithium metal oxide particle and the electrolyte solution may occur and a deterioration of life-span properties of the lithium secondary battery may be caused. Additionally, the gas generation and the deterioration of life-span properties may become more severe in a high temperature environment.

### SUMMARY

According to an aspect of the present disclosure, there is provided a cathode active for a lithium secondary battery having improved life-span properties.

According to an aspect of the present invention, there is provided a lithium secondary battery including a cathode active for a lithium secondary battery with improved life-span properties.

A cathode for a lithium secondary battery includes a cathode current collector, a first cathode active material layer formed on the cathode current collector and including a first cathode active material and a first cathode conductive material, and a second cathode active material layer formed on the first cathode active material layer and including a second cathode active material that has an average particle diameter larger than that of the first cathode active material, and a second cathode conductive material. A content of the first cathode conductive material based on a total weight of the first cathode active material layer is greater than a content of the second cathode conductive material based on a total weight of the second cathode active material layer.

In some embodiments, the average particle diameter of the first cathode active material may be in a range from 2 µm to 10 µm, and the average particle diameter of the second cathode active material may be in a range from 5 µm to 20 µm.

In some embodiments, a ratio of the average particle diameter of the second cathode active material to the average particle diameter of the first cathode active material may be in a range from 2 to 5.

In some embodiments, the content of the first cathode conductive material may be in a range from 0.5 wt% to 3.0 wt% based on the total weight of the first cathode active material layer, and the content of the second cathode conductive material may be in a range from 0.5 wt% to 2.0 wt% based on the total weight of the second cathode active material layer.

In some embodiments, the first cathode conductive material may include at least two types of materials.

In some embodiments, the second cathode conductive material may consist of a single material.

In some embodiments, the first cathode active material layer may further include a first cathode binder, and the second cathode active material layer may further include a second cathode binder. A content of the first cathode binder based on the total weight of the first cathode active material layer is greater than a content of the second cathode binder based on the total weight of the second cathode active material layer.

In some embodiments, the content of the first cathode binder may be in a range from 0.5 wt% to 4.0 wt% based on the total weight of the first cathode active material layer, and the content of the second cathode binder may be in a range from 0.5 wt% to 2.5 wt% based on the total weight of the second cathode active material layer.

In some embodiments, the cathode may further include a third cathode active material layer on the second cathode active material layer. The third cathode active material layer may include a third cathode active material having an average particle diameter larger than the average particle diameter of the second cathode active material, and a third cathode conductive material.

In some embodiments, the content of the second cathode conductive material based on the total weight of the second cathode active material layer may be greater than a content of the third cathode conductive material based on the total weight of the third cathode active material layer.

A lithium secondary battery includes the above-described cathode and an anode facing the cathode.

According to embodiments of the present disclosure, a degradation degree of a cathode active material included in a cathode for a lithium secondary battery may become entirely uniform. Accordingly, side reactions may be suppressed, life-span properties may be improved, and cracks in an active material may be suppressed.

In some embodiments, the lithium secondary battery may include the cathode for a lithium secondary battery, so that stable power properties and improved life-span properties may be commonly achieved.

The cathode active material and the lithium secondary battery of the present disclosure may be widely applied in green technology fields such as an electric vehicle, a battery charging station, a solar power generation, a wind power generation, etc., using a battery, etc. The cathode active material and the lithium secondary battery according to the present disclosure may be used for eco-friendly electric vehicles and hybrid vehicles to prevent a climate change by suppressing air pollution and greenhouse gas emissions, etc.

### BRIEF DESCRIPTION OF THE DRAWINGS

FIGS. 1 and 2 are schematic cross-sectional views illustrating a cathode for a lithium secondary battery in accordance with example embodiments.
FIGS. 3 and 4 are a schematic plan view and a schematic cross-sectional view, respectively, illustrating a lithium secondary battery in accordance with example embodiments.

### DETAILED DESCRIPTION OF THE EMBODIMENTS

According to embodiments of the present disclosure, a cathode for a lithium secondary battery having a multi-layered structure may be provided. Additionally, a lithium secondary battery including the cathode is provided.

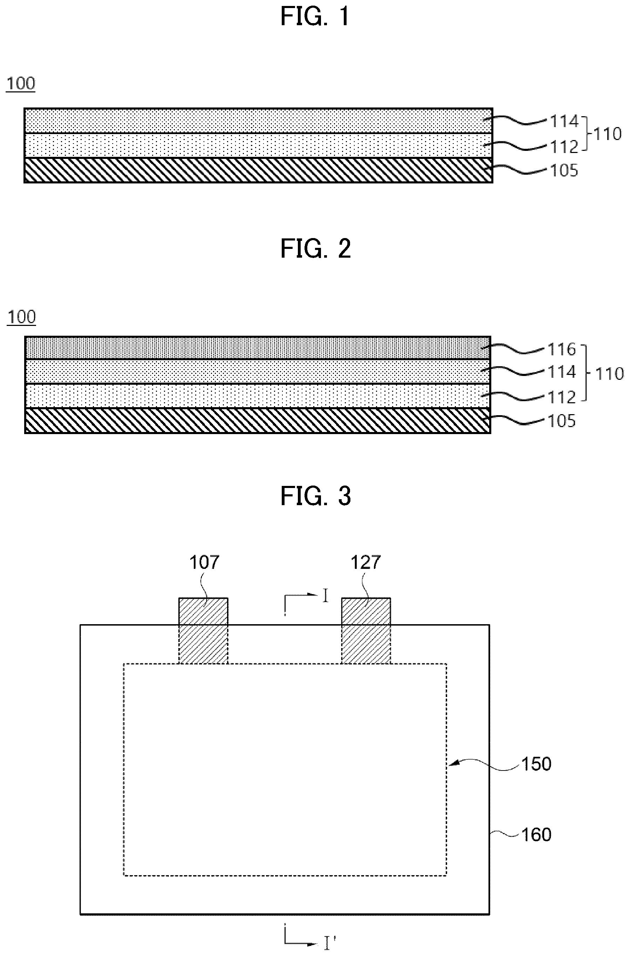

FIGS. 1 and 2 are schematic cross-sectional views illustrating a cathode for a lithium secondary battery in accordance with example embodiments.

Referring to FIG. 1, a cathode 100 for a lithium secondary battery includes a cathode current collector 105, a first cathode active material layer 112 formed on the cathode current collector 105, and a first cathode active material layer 112 formed on the second cathode active material layer 114.

In example embodiments, the first cathode active material layer 112 may include a first cathode active material and a first cathode conductive material, and the second cathode active material layer 114 may include a second cathode active material and a second cathode conductive material.

The cathode current collector 105 may include stainless steel, nickel, aluminum, titanium, copper or an alloy thereof. The cathode current collector 105 may include aluminum or stainless steel surface treated with carbon, nickel, titanium, silver, etc. For example, a thickness of the cathode current collector 105 may be in a range from 10 µm to 50 µm.

The first cathode active material and the second cathode active material may include a compound capable of reversibly intercalating and de-intercalating lithium ions.

According to example embodiments, the first cathode active material and the second cathode active material may each independently include a lithium-nickel metal oxide. The lithium-nickel metal oxide may further include at least one of cobalt (Co), manganese (Mn) and aluminum (Al).

In some embodiments, the first cathode active material, the second cathode active material or the lithium-nickel metal oxide may include a layered structure or a crystal structure represented by Chemical Formula 1 below.

[Chemical Formula 1] LiₓNiₐM_{b}O_{2+z}

In Chemical Formula 1, 0.9<x<1.5, 0.6≤a≤0.99, 0.01≤b≤0.4, and -0.5≤z≤0.1. As described above, M may include Co, Mn and/or Al.

The chemical structure represented by Chemical Formula 1 represents a bonding relationship included in the layered structure or the crystal structure of the cathode active material or the lithium-transition nickel metal oxide particle, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-transition metal oxide particle may include a layered structure or a crystal structure represented by Chemical Formula 1-1.

[Chemical Formula 1-1] LiₓNiₐM1_{b1}M2_{b2}O_{2+z}

In Chemical Formula 1-1, M1 may include Co, Mn and/or Al. M2 may include the above-described auxiliary element. In Chemical Formula 1-1, 0.9≤x≤1.2, 0.6≤a≤0.99, 0.01≤b1+b2≤0.5, and -0.5≤z≤0.1.

The cathode active material above may further include a doping element. For example, elements substantially the same as or similar to the above-described auxiliary elements may be used as the doping element. For example, the above-described elements may be used alone or in a combination of two or more therefrom as the doping element.

The doping element may be present on a surface of the lithium-transition metal oxide particle, or may penetrate through the surface of the lithium-transition metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., , a mole fraction of nickel based on the total number of moles of nickel, cobalt and manganese) may be 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the first cathode active material and the second cathode active material may each independently include a lithium cobalt oxide-based active material, a lithium manganese oxide-based active material, a lithium nickel oxide-based active material, or a lithium iron phosphate (LFP) active material (e.g., LiFePO₄).

In some embodiments, the first cathode active material and the second cathode active material may each independently include, e.g., a Mn-rich active material having a chemical structure or a crystal structure represented by Chemical Formula 2, a Li-rich layered oxide (LLO)/OLO (Over-Lithiated Oxide)-based active material, a Co-less-based active material, etc.

[Chemical Formula 2] p[Li₂MnO₃]·(1-p)[Li_{q}JO₂]

In Chemical Formula 2, 0<p<1, 0.9<q<1.2, and J may include at least one element from Mn, Ni, Co, Fe, Cr, V, Cu, Zn, Ti, Al, Mg and B.

In example embodiments, an average particle diameter (D50) of the second cathode active material may be larger than an average particle diameter of the first cathode active material.

The term "average particle diameter" or "D50" used herein may refer to a particle diameter when a volume cumulative percentage corresponds to 50% in a particle size distribution based on a particle volume.

In some embodiments, the average particle diameter of the first cathode active material may be in a range from 2 µm to 10 µm, from 2 µm to 8 µm, or from 2 µm to 6 µm. In the above range, power properties of the cathode may be improved by the first cathode active material having a small average particle diameter.

In some embodiments, the average particle diameter of the second cathode active material may be in a range from 5 µm to 20 µm, from 5 µm to 15 µm, from 7 µm to 15 µm, or from 9 µm to 15 µm. In the above range, life-span properties may be improved by the second cathode active material having a large average particle diameter.

For example, a ratio of the average particle diameter of the second cathode active material relative to the average particle diameter of the first cathode active material may be in a range from 2 to 5, from 3 to 5, or from 3 to 4. In the above range, degradation of the cathode active material may occur uniformly throughout the cathode. Accordingly, side reactions of the cathode active material may be suppressed, and cracks in the first and second cathode active materials may be suppressed, thereby improving the life-span properties.

For example, a cathode slurry may be prepared by mixing the cathode active material in a solvent. The cathode slurry may be coated on the cathode current collector 105, and then dried and pressed to form the cathode active material layer 110. Non-limiting example of the process may include a gravure coating, a slot die coating, a multilayer simultaneous die coating, an imprinting, a doctor blade coating, a dip coating, a bar coating, a casting, etc.

In an embodiment, the first cathode slurry may be prepared by mixing the first cathode active material in the solvent. A second cathode slurry may be prepared by mixing the second cathode active material in the solvent. The first cathode slurry may be coated on the cathode current collector 105, and then dried and pressed to form the first cathode active material layer 112. The second cathode slurry may be coated on the first cathode active material layer 112, and then dried and pressed to form the second cathode active material layer 114. Accordingly, the first cathode active material layer 112 and the second cathode active material layer 114 may be sequentially formed.

In an embodiment, the first cathode slurry may be prepared by mixing the first cathode active material in the solvent. The second cathode slurry may be prepared by mixing the second cathode active material in the solvent. The first cathode slurry and the second cathode slurry may be coated on the cathode current collector 105, and then dried and pressed to form the first cathode active material layer 112 and the second cathode active material layer 114. Accordingly, the first cathode active material layer 112 and the second cathode active material layer 114 may be simultaneously formed.

The cathode active material layer 110 may further include a conductive material, and may optionally further include a binder, a thickener, etc. For example, the first cathode active material layer 112 may further include a first cathode conductive material, and may further optionally include a first cathode binder, a thickener, etc. For example, the second cathode active material layer 114 may further include a second cathode conductive material, and may further optionally include a second cathode binder, a thickener, etc.

Non-limiting examples of solvents used in the formation of the cathode active material layer 110 include N-methyl-2-pyrrolidone (NMP), dimethylformamide, dimethylacetamide, N,N-dimethylaminopropylamine, ethylene oxide, tetrahydrofuran, etc.

The first cathode conductive material and the second cathode conductive material may be added to improve a conductivity and/or a mobility of lithium ions or electrons. For example, the first cathode conductive material and the second cathode conductive material may each independently include a carbon-based conductive material such as graphite, carbon black, acetylene black, Ketjen black, graphene, a carbon nanotube, a VGCF (vapor-grown carbon fiber), a carbon fiber, etc.; and/or a metal-based conductive material including tin, tin oxide, titanium oxide, a perovskite material such as LaSrCoO₃, LaSrMnO₃, etc.

In example embodiments, a content of the first cathode conductive material based on a total weight of the first cathode active material layer 112 may be greater than a content of the second cathode conductive material based on a total weight of the second cathode active material layer 114. An electrical conductivity of the first cathode active material layer 112 disposed on the cathode current collector 105 may be higher than an electrical conductivity of the second cathode active material layer 114 disposed at an outermost portion of the cathode 100. Accordingly, the power properties of the first cathode active material layer 112 protected by the second cathode active material layer 114 may be maintained or improved, and the life-span properties may be improved.

In some embodiments, the content of the first cathode conductive material may be in a range from 0.5 wt% (weight percent) to 3.0 wt%, from 0.5 wt% to 2.5 wt%, or from 1.0 wt% to 2.5 wt% based on the total weight of the first cathode active material layer 112. In the above range, the first cathode active material layer 112 may sufficiently contain the first cathode active material with a small particle size, thereby improving the conductivity.

In an embodiment, the content of the first cathode conductive material may be in a range from 1.5 wt% to 2.5 wt%, from 1.5 wt% to 2.3 wt%, or from 1.8 wt% to 2.3 wt% based on the total weight of the first cathode active material layer 112. In the above range, the conductivity of the cathode 100 may be further improved.

In some embodiments, the content of the second cathode conductive material may be in a range from 0.5 wt% to 2.0 wt%, from 0.5 wt% to 1.5 wt%, or from 0.8 wt% to 1.5 wt% based on the total weight of the second cathode active material layer 114. In the above range, the second cathode active material layer 114 may sufficiently contain the second cathode active material having a large particle diameter to prevent cracks and improve the life-span properties.

In an embodiment, the content of the second cathode conductive material may be in a range from 1.0 wt% to 1.5 wt%, or from 1.3 wt% to 1.5 wt% based on the total weight of the second cathode active material layer 114. In the above range, the life-span properties of the cathode 100 may be further improved.

In some embodiments, the first cathode conductive material may include more types of conductive materials than that of the second cathode conductive material. For example, the first cathode conductive material and the second cathode conductive material may each include a mixture of two or more types of conductive materials. For example, the number of types of the conductive materials mixed in the first cathode conductive material may be greater than the number of types of conductive materials mixed in the second cathode conductive material. Accordingly, the electrical conductivity of the first cathode active material layer 112 may be higher than that of the cathode active material layer 114.

In some embodiments, the first cathode conductive material may include at least two types of materials. For example, the first cathode conductive material may include two or more types of materials, and the second cathode conductive material may substantially consist of a single-type material.

In some embodiments, the first cathode active material layer 112 may further include the first cathode binder, and the second cathode active material layer 114 may further include the second cathode binder.

The first cathode binder and the second cathode binder may each independently include polyvinylidene fluoride (PVDF), poly(vinylidene fluoride-co-hexafluoropropylene (PVDF-co-HFP), polyacrylonitrile, polymethylmethacrylate, acrylonitrile butadiene rubber (NBR), polybutadiene rubber (BR), styrene-butadiene rubber, etc.

In an embodiment, a PVDF-based binder may be used as the first cathode binder and the second binder. Accordingly, amounts of the first cathode binder and the second cathode binder included in the first cathode active material layer 112 and the second cathode active material layer 114, respectively, may be reduced, thereby increasing amounts of the first and second cathode active materials contained in the first and second cathode active material layers 112 and 114. Thus, the power and capacity properties of the secondary battery may be improved.

In some embodiments, a content of the first cathode binder based on the total weight of the first cathode active material layer 112 may be greater than a content of the second cathode binder based on the total weight of the second cathode active material layer 114. Accordingly, the first cathode binder having a relatively high content may be protected by the second cathode active material layer 114 to enhance mechanical stability of the cathode.

In an embodiment, the content of the first cathode binder may in a range from 0.5 wt% to 4.0 wt%, from 1.0 wt% to 4.0 wt%, from 1.5 wt% to 4.0 wt%, from 2.0 wt% to 4.0 wt%, or from 2.5 wt% to 4.0 wt% based on the total weight of the first cathode active material layer 112. In the above range, the first cathode active material layer 112 may sufficiently contain the first cathode active material having the small particle diameter, thereby enhancing the conductivity.

In an embodiment, the content of the second cathode binder may be in a range from 0.5 wt% to 2.5 wt%, from 1.0 wt% to 2.5 wt%, from 1.5 wt% to 2.5 wt%, from 1.5 wt% to 2.2 wt%, or from 1.8 wt% to 2.2 wt% based on the total weight of the second cathode active material layer 114. In the above range, the second cathode active material layer 114 may sufficiently contain the second cathode active material having the large particle diameter to prevent cracks and improve the life-span properties.

In one embodiment, the cathode active material layer 110 may further include the thickener and/or a dispersive agent. In an embodiment, the cathode active material layer 110 may include the thickener such as carboxymethyl cellulose (CMC).

Referring to FIG. 2, the cathode 100 may be formed on the second cathode active material layer 114 and may further include a third cathode active material layer 116 including a third cathode active material and a third cathode conductive material.

In some embodiments, an average particle diameter of the third cathode active material may be larger than the average particle diameter of the second cathode active material. For example, the average particle diameter of the third cathode active material may be larger than the average particle diameter of the second cathode active material, and the average particle diameter of the second cathode active material may be larger than the average particle diameter of the first cathode active material.

Accordingly, degradation degree of the cathode active material (e.g., the first cathode active material, the second cathode active material, and the third cathode active material) included in the cathode may be more uniform entirely. Thus, side reactions between the cathode active material and a solvent of the electrolyte solution may be suppressed, and cracks in the cathode active materials may be suppressed to further improve life-span properties.

In some embodiments, the content of the second cathode conductive material based on the total weight of the second cathode active material layer 114 may be greater than a content of the third cathode conductive material based on a total weight of the third cathode active material layer 116. In this case, the electrical conductivity of the second cathode active material layer 114 may be higher than that of the third cathode active material layer 116 disposed at the outermost portion of the cathode 100. Accordingly, the life-span properties may be improved while maintaining or improving the power properties of the second cathode active material layer 114 protected by the third cathode active material layer 116.

In some embodiments, the second cathode conductive material may include more types of conductive materials than that in the third cathode conductive material. For example, the second cathode conductive material and the third cathode conductive material may each be used in a mixture of two or more types of conductive materials.

For example, the number of types of mixed conductive materials of the second cathode conductive material may be greater than the number of types of mixed conductive materials of the third cathode conductive material. Accordingly, the electrical conductivity of the second cathode active material layer 114 may be higher than that of the third cathode active material layer 116.

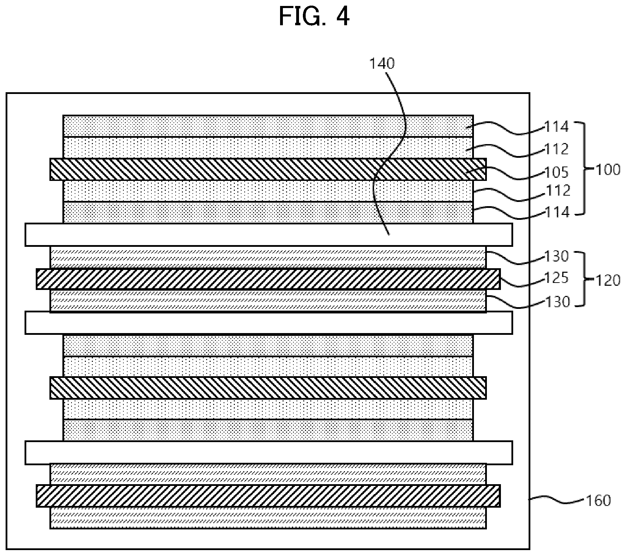

FIGS. 3 and 4 are a schematic plan view and a schematic cross-sectional view, respectively, illustrating a lithium secondary battery in accordance with example embodiments. FIG. 4 is a cross-sectional view taken along a line I-I' of Fig. 3.

Referring to FIGS. 3 and 4, the lithium secondary battery may include the above-described cathode 100, an anode 120 and the separator 140.

The cathode 100 may include the cathode current collector 105, the first cathode active material layer 112 formed on the cathode current collector 105, and the second cathode active material layer 114 formed on the first cathode active material layer 112.

The anode 120 may include an anode current collector 125 and an anode active material layer 130 disposed on at least one surface of the anode current collector 125.

Non-limiting examples of the anode current collector 125 may include a copper foil, a nickel foil, a stainless steel foil, a titanium foil, a nickel foam, a copper foam, a polymer substrate coated with a conductive metal, etc. A thickness of the anode current collector 125 may be, e.g., in a range from 10 µm to 50 µm, but is not limited thereto.

The anode active material layer 130 may include an anode active material. A material capable of adsorbing and desorbing lithium ions may be used as the anode active material. For example, the anode active material may include carbon-based materials such as a crystalline carbon, an amorphous carbon, a carbon composite, a carbon fiber; a lithium metal; a lithium alloy; a silicon (Si)-containing material or a tin (Sn)-containing material, etc.

For example, the amorphous carbon may include a hard carbon, cokes, a mesocarbon microbead (MCMB), a mesophase pitch-based carbon fiber (MPCF), etc.

For example, the crystalline carbon may include natural graphite, artificial graphite, a graphitized cokes, a graphitized MCMB, a graphitized MPCF, etc.

The lithium metal may include a pure lithium metal or a lithium metal having a protective layer formed thereon for inhibiting a dendrite growth. In an embodiment, a lithium metal-containing layer deposited or coated on an anode current collector may be used as the anode active material layer 130. In an embodiment, a lithium thin film layer may be used as the anode active material layer.

An element capable of being included in the lithium alloy may include aluminum, zinc, bismuth, cadmium, antimony, silicon, lead, tin, gallium, indium, etc.

The silicon-containing material may provide an increased capacity. The silicon-containing material may include Si, a SiOx (0<x<2), a metal-doped SiOx (0<x<2), a silicon-carbon composite, etc. The metal may include lithium and/or magnesium, and the metal-doped SiOx (0<x<2) may include a metal silicate.

For example, an anode slurry can be prepared by mixing the anode active material in a solvent. The anode slurry may be coated/deposited on the anode current collector 125, and then dried and pressed to form the anode active material layer 130. The coating process may include a gravure coating, a slot die coating, a multi-layered simultaneous die coating, an imprinting, a doctor blade coating, a dip coating, a bar coating, a casting, etc.

The anode active material layer 130 may further include a binder and optionally may further include a conductive material, a thickener, etc.

In some embodiments, the anode 120 may include an anode active material layer 130 in the form of a lithium metal formed through a deposition/coating process.

Non-limiting examples of the solvent for the anode active material layer include water, pure water, deionized water, distilled water, ethanol, isopropanol, methanol, acetone, n-propanol, t-butanol, etc.

The above-described materials that may be used in the fabrication of the cathode 100 may also be used as the binder, the conductive material and the thickener.

In some embodiments, the anode binder may include a styrene-butadiene rubber (SBR)-based binder, carboxymethyl cellulose (CMC), a polyacrylic acid-based binder, a poly(3,4- ethylenedioxythiophene) (PEDOT)-based binder, etc.

In some embodiments, a separator 140 may be interposed between the cathode 100 and the anode 120. The separator may prevent an electrical short circuit between the cathode 100 and the anode 120 while maintaining a flow of ions. For example, a thickness of the separator may be 10 µm to 20 µm.

For example, the separator 140 may include a porous polymer film or a porous non-woven fabric. The porous polymer film may include a polyolefin-based polymer such as an ethylene polymer, a propylene polymer, an ethylene/butene copolymer, an ethylene/hexene copolymer, an ethylene/methacrylate copolymer, etc.

The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or multi-layered structure including the polymer film and/or the non-woven fabric as described above.

In example embodiments, the cathode 100, the anode 120 and the separator 140 may be repeatedly arranged to form the electrode assembly 150. In some embodiments, the electrode assembly 150 may be a winding type, a stack type, a z-folding type, or a stack-folding type.

The electrode assembly 150 may be accommodated within a case 160 together with an electrolyte solution to define a lithium secondary battery. In example embodiments, a non-aqueous electrolyte solution may be used as the electrolyte solution.

The non-aqueous electrolyte solution may include a lithium salt as an electrolyte and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N; CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include an organic compound that has a sufficient solubility of the lithium salt and an additive and is not reactive in the battery. The organic solvent may include, e.g., at least one of a carbonate-based solvent, an ester-based solvent, an ethyl-based solvent, a ketone-based solvent, an alcohol-based solvent, and/or an aprotic solvent.

Examples of the organic solvent include propylene carbonate (PC), ethylene carbonate (EC), butylene carbonate, diethyl carbonate (DEC), dimethyl carbonate. DMC), ethyl methyl carbonate (EMC), methylpropyl carbonate, ethylpropyl carbonate, dipropyl carbonate, vinylene carbonate, methyl acetate (MA), ethyl acetate (EA), n- propyl acetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethylsulfoxide, acetonitrile, diethoxyethane, sulfolane, gamma-butyrolactone, propylene sulfite, etc. These may be used alone or in a combination of two or more therefrom.

The non-aqueous electrolyte solution may further include the additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound.

The cyclic carbonate-based compound may include vinylene carbonate (VC), vinyl ethylene carbonate (VEC), etc.

The fluorine-substituted carbonate-based compound may include fluoroethylene carbonate (FEC).

The sultone-based compounds include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

As illustrated in FIG. 4, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

Hereinafter, experimental examples are proposed to more concretely describe the present disclosure. However, the following examples are only given for illustrating the present disclosure and those skilled in the related art will obviously understand that various alterations and modifications are possible within the scope and spirit of the present disclosure. Such alterations and modifications are duly included in the appended claims.

### Examples and Comparative Examples

### Example 1

### (1) Fabrication of cathode

LiNi_{0.8}Co_{0.1}Mn_{0.1}O₂ (average particle diameter: 4 µm) as a first cathode active material, carbon black as a first cathode conductive material and polyvinylidene fluoride (PVDF) as a first cathode binder were mixed in a weight ratio of 94.5: 1.5:4 to prepare a first cathode active material layer slurry. An aluminum foil having a protrusion (cathode tab) at one side thereof was prepared. The slurry was coated on a region except for the protrusion of the aluminum foil, and then dried and pressed to form a first cathode active material layer.

Thereafter, LiNi_{0.8}Co_{0.1}Mn_{0.1}O₂ (average particle diameter: 15 µm) as a second cathode active material, carbon black as a second cathode conductive material, and polyvinylidene fluoride (PVDF) as a second cathode binder were mixed in a weight ratio of 97:1:2 to prepare a second cathode active material layer. The slurry was coated, dried, and pressed on the first cathode active material layer to form a second cathode active material layer.

### (2) Fabrication of anode

An anode active material in which artificial graphite and natural graphite were mixed in a weight ratio of 7:3, a styrene-butadiene rubber and carboxymethyl cellulose were dispersed in distilled water in a weight ratio of 97:1:2 to prepare an anode slurry. A copper foil having a protrusion (anode tab) at one side thereof was prepared. The slurry was coated on a region except for the protrusion of the copper foil, and then dried and pressed to form an anode.

### (3) Fabrication of lithium secondary battery

An electrode assembly was formed by interposing a polyethylene separator (thickness: 20 µm) between the cathode and the anode. A cathode lead and an anode lead were welded to the cathode tab and the anode tab.

1 M of LiPF₆ solution (30:70 v/v EC/EMC mixed solvent) was prepared, and 1 wt% of fluoroethylene carbonate (FEC), 0.3 wt% of vinyl ethylene carbonate (VEC), 1 wt% of lithium difluorophosphate (LiPO₂F₂), 0.5 wt% of PS (1,3-propane sultone), and 0.5 wt% of PRS (prop-1-ene-1,3-sultone) were added based on 100 wt% of an electrolyte solution to prepare the electrolyte solution.

The electrode assembly was accommodated in a pouch (case) such that some portions of the cathode lead and the anode lead were exposed to an outside, and three sides excluding an electrolyte injection side were sealed.

The electrolyte solution was injected into the pouch and three sides of the electrolyte injection side was sealed to manufacture a lithium secondary battery.

### Example 2

A lithium secondary battery was manufactured by the same method as that in Example 1, except that the weight ratio of the first cathode active material : the first cathode conductive material : the first cathode binder was changed to 94:2:4.

### Example 3

A lithium secondary battery was manufactured by the same method as that in Example 1, except that the weight ratio of the first cathode active material: the first cathode conductive material (carbon black): the first cathode binder was changed to 93.5:1.5:1:4.

### Example 4

A first cathode active material layer slurry was prepared by mixing LiNi_{0.8}Co_{0.1}Mn_{0.1}O₂ (average particle diameter: 4 µm) as a first cathode active material, carbon black as a first cathode conductive material and polyvinylidene fluoride (PVDF) as a first cathode binder in a weight ratio of 94.5:1.5:4. An aluminum foil having a protrusion (cathode tab) at one side thereof was prepared. The slurry was coated, dried, and pressed on a region of the aluminum foil except for the protrusion to form a first cathode active material layer.

LiNi_{0.8}Co_{0.1}Mn_{0.1}O₂ (average particle diameter: 6 µm) as a second cathode active material, carbon black as a second cathode conductive material and polyvinylidene fluoride (PVDF) as a second cathode binder were mixed at a weight ratio of 95.75:1.25:3 to prepare a second cathode active material layer slurry. The second cathode active material layer slurry was coated, dried, and pressed on the first cathode active material layer to form a second cathode active material layer.

LiNi_{0.8}Co_{0.1}Mn_{0.1}O₂ (average particle diameter: 15 µm) as a third cathode active material, carbon black as a third cathode conductive material and polyvinylidene fluoride (PVDF) as a third cathode binder were mixed in a weight ratio of 97:1:2 to prepare a third cathode active material layer slurry. The third cathode active material slurry was coated, dried, and pressed on the second cathode active material layer to form a third cathode active material layer.

Thereafter, an anode and a lithium secondary battery were manufactured by the same method as that in Example 1.

### Comparative Example 1

A cathode active material was prepared by mixing LiNi_{0.8}Co_{0.1}Mn_{0.1}O₂ having a large particle diameter (average particle diameter: 15 µm) and LiNi_{0.8}Co_{0.1}Mn_{0.1}O₂ having a small particle diameter (average particle diameter: 4 µm) in a ratio of 1:1.

A cathode slurry was prepared by mixing the cathode active material, carbon black as a cathode conductive material and polyvinylidene fluoride (PVDF) as a cathode binder in a weight ratio of 95.75:1.25:3. An aluminum foil having a protrusion (cathode tab) at one side thereof was prepared. The slurry was coated, dried, and pressed on a region of the aluminum foil except for the protrusion to form a cathode.

A lithium secondary battery was manufactured by the same method as that in Example 1 except for the above-described details.

### Comparative Example 2

LiNi_{0.8}Co_{0.1}Mn_{0.1}O₂ having a large particle diameter (average particle diameter: 15 µm), LiNi_{0.8}Co_{0.1}Mn_{0.1}O₂ having a medium particle diameter (average particle diameter: 6 µm) and LiNi_{0.8}Co_{0.1}Mn_{0.1}O₂ having a small particle diameter (average particle diameter: 4 µm) were mixed in a ratio of 1:1:1 to prepare a cathode active material.

The cathode slurry was prepared by mixing the cathode active material, carbon black as a cathode conductive material and polyvinylidene fluoride (PVDF) as a cathode binder in a weight ratio of 95.75:1.25:3. An aluminum foil having a protrusion (cathode tab) at one side thereof was prepared. The slurry was coated, dried and pressed on a region of the aluminum foil except for the protrusion to form a cathode.

A lithium secondary battery was manufactured by the same method as that in Example 1 except for the above-described details.

### Comparative Example 3

A lithium secondary battery was manufactured by the same manner as that in Example 1, except that the average particle diameter of the first cathode active material was 15 µm and the average particle diameter of the second cathode active material was 4 µm, the weight ratio of the first cathode active material: the first cathode conductive material: the first cathode binder was changed to 97:1:2, and the weight ratio of the second cathode active material: the second cathode conductive material: the second cathode binder was changed to 94.5:1.5:4.

### Comparative Example 4

A lithium secondary battery was manufactured by the same manner as that in Example 1, except that the weight ratio of the first cathode active material, the first cathode conductive material and the first cathode binder was changed to 95:1:4 and the weight ratio of the second cathode active material, the second cathode conductive material and the second cathode binder was changed to 96.5:1.5:2.

### Experimental Example

### (1) Measurement of initial charge capacity, initial discharge capacity and initial capacity efficiency

Each lithium secondary battery manufactured according to the above-described Examples and Comparative Examples was charged (CC-CV 0.1C 4.3V 0.005C CUT-OFF) in a 25°C chamber, and a battery capacity (initial charge capacity) was measured. The battery was discharged (CC 0.1C 3.0V CUT-OFF), and a battery capacity (initial discharge capacity) was measured.

An initial capacity efficiency was evaluated as a percentage (%) of the measured initial discharge capacity relative to the measured initial charge capacity.

### (2) Evaluation on internal resistance (DC-IR)

Each lithium secondary battery manufactured according to the above-described Examples and Comparative Examples was 0.3C CC/CV charged (4.2V 0.05C CUT-OFF) at 25°C, and then 0.3C CC discharged to an SOC 50%. At the SOC 50%, the C-rate was changed to 0.2C, 0.5C, 1.0C, 1.5C, 2.0C, 2.5C and 3.0C while discharging and recharging were performed for 10 seconds at each cycle. During the discharging and recharging, a terminal point of a voltage was set to an equation of a straight line, and a slope was adopted as a DC-IR.

### (3) Measurement of capacity retention (life-span property) during repeated charging and discharging

For the lithium secondary batteries according to the above-described Examples and Comparative Examples, charging (CC/CV 1.0C 4.2V 0.05C CUT-OFF) and discharging (CC 1.0C 2.5V CUT-OFF) were repeated by 500 cycles in a 45°C chamber. A capacity retention was evaluated as a percentage of the discharge capacity at the 500th cycle by the discharge capacity at the 1st cycle.

The evaluation results are shown in Table 1 below.

**[Table 1]**

| | initial charge capacity (mAh/g) | initial discharge capacity (mAh/g) | initial capacity efficiency (%) | internal resistance (DC-IR) (mΩ) | capacity retention (500cyc, %) |
|---|---|---|---|---|---|
| Example 1 | 229.8 | 204.5 | 89.0 | 1.103 | 88.2 |
| Example 2 | 229.2 | 206.3 | 90.0 | 1.074 | 89.3 |
| Example 3 | 226.8 | 204.8 | 90.3 | 1.043 | 89.2 |
| Example 4 | 229.8 | 203.6 | 88.6 | 1.002 | 89.1 |
| Comparative Example 1 | 229.8 | 198.1 | 86.2 | 1.190 | 87.2 |
| Comparative Example 2 | 229.8 | 199.9 | 87.0 | 1.160 | 88.3 |
| Comparative Example 3 | 229.8 | 201.3 | 87.6 | 1.219 | 86.3 |
| Comparative Example 4 | 229.8 | 198.8 | 86.5 | 1.213 | 86.1 |

Referring to Table 1, in Examples where the small-diameter cathode active material was used in the cathode active material layer adjacent to the cathode current collector and the content of the conductive material was increased, the initial capacity efficiency was 88.5% or more, and the capacity retention exceeded 88%.

In Example 3 where two types of conductive materials were used as the conductive material in the first cathode active material layer, the initial capacity efficiency and the capacity retention were slightly increased.

In Example 4 where the cathode active material layer included the first cathode active material layer, the second cathode active material layer, and the third cathode active material layer, the capacity retention was increased.

In Comparative Example 1 where two types of the cathode active materials with different particle sizes were used, but a single cathode active material layer was formed by mixing the two types of cathode active materials, the initial capacity efficiency and the capacity retention were decreased.

In Comparative Example 2 where three types of the cathode active materials with different particle sizes were used, but a single cathode active material layer was formed by mixing the three types of the cathode active materials, the initial capacity efficiency was decreased

In Comparative Example 3 where the double-layered cathode active material layer was used, but the particle size of the cathode active material was larger and the content of the conductive material was low in the cathode active material layer adjacent to the cathode current collector, the initial capacity efficiency and the capacity retention were decreased.

In Comparative Example 4 where the double-layered cathode active material layer was used, but the content of the conductive material was low in the cathode active material layer adjacent to the cathode current collector, the initial capacity efficiency and the capacity retention were decreased.

## Claims

1. A cathode for a lithium secondary battery, comprising:
a cathode current collector;
a first cathode active material layer formed on the cathode current collector, the first cathode active material layer including a first cathode active material and a first cathode conductive material; and
a second cathode active material layer formed on the first cathode active material layer, the second cathode active material layer including a second cathode active material that has an average particle diameter larger than that of the first cathode active material, and a second cathode conductive material,
wherein a content of the first cathode conductive material based on a total weight of the first cathode active material layer is greater than a content of the second cathode conductive material based on a total weight of the second cathode active material layer.

2. The cathode for a lithium secondary battery according to claim 1, wherein the average particle diameter of the first cathode active material is in a range from 2 µm to 10 µm, and the average particle diameter of the second cathode active material is in a range from 5 µm to 20 µm.

3. The cathode for a lithium secondary battery according to claims 1 or 2, wherein a ratio of the average particle diameter of the second cathode active material to the average particle diameter of the first cathode active material is in a range from 2 to 5.

4. The cathode for a lithium secondary battery according to one of claims 1 to 3, wherein the content of the first cathode conductive material is in a range from 0.5 wt% to 3.0 wt% based on the total weight of the first cathode active material layer, and
the content of the second cathode conductive material is in a range from 0.5 wt% to 2.0 wt% based on the total weight of the second cathode active material layer.

5. The cathode for a lithium secondary battery according to one of claims 1 to 4, wherein the first cathode conductive material includes at least two types of materials.

6. The cathode for a lithium secondary battery according to one of claims 1 to 5, wherein the second cathode conductive material consists of a single material.

7. The cathode for a lithium secondary battery according to one of claims 1 to 6, wherein the first cathode active material layer further includes a first cathode binder, and the second cathode active material layer further includes a second cathode binder,
wherein a content of the first cathode binder based on the total weight of the first cathode active material layer is greater than a content of the second cathode binder based on the total weight of the second cathode active material layer.

8. The cathode for a lithium secondary battery according to claim 7, wherein the content of the first cathode binder is in a range from 0.5 wt% to 4.0 wt% based on the total weight of the first cathode active material layer, and
the content of the second cathode binder is in a range from 0.5 wt% to 2.5 wt% based on the total weight of the second cathode active material layer.

9. The cathode for a lithium secondary battery according to one of claims 1 to 8, further comprising a third cathode active material layer on the second cathode active material layer,
wherein the third cathode active material layer includes a third cathode active material having an average particle diameter larger than the average particle diameter of the second cathode active material, and a third cathode conductive material.

10. The cathode for a lithium secondary battery according to claim 9, wherein the content of the second cathode conductive material based on the total weight of the second cathode active material layer is greater than a content of the third cathode conductive material based on the total weight of the third cathode active material layer.

11. A lithium secondary battery, comprising:
the cathode 100 for a lithium secondary battery according to one of claims 1 to 10; and
an anode 120 facing the cathode 100.
